# EUROPÄISCHE PATENTSCHRIFT

(11) **EP 0 880 190 B1**
(45) Veröffentlichungstag und Bekanntmachung des Hinweises auf die Patenterteilung: **03.11.2004**
(21) Anmeldenummer: 98103110.7
(22) Anmeldetag: 23.02.1998
(51) Int. Cl.: H01M 10/50, C04B 30/02

(54) **Mehrzelliger Akkumulator**
Multicell accumulator
Accumulateur multicellulaire

(30) Priorität: 22.05.1997 DE 19721348
(43) Veröffentlichungstag der Anmeldung: 25.11.1998
(73) Patentinhaber: VARTA Automotive Systems GmbH, 30419 Hannover (DE)
(72) Erfinder: Brohm, Thomas, Dr., 65795 Hattersheim (DE); Böttcher, Friedhelm, Dr., 65766 Kelkheim (DE)
(74) Vertreter: Lins, Edgar, Dipl.-Phys. Dr.jur.

(56) Entgegenhaltungen:
- DE-A- 2 819 026
- DE-A- 3 117 201
- DE-A- 19 533 565

## Beschreibung

Die Erfindung betrifft einen mehrzelligen Akkumulator, insbesondere einen Lithium-Akkumulator, der eine Temperiervorrichtung enthält.

Mehrzellige Akkumulatoren, insbesondere Akkumulatoren, die beispielsweise für Traktionszwecke benutzt werden und bei denen ständig mit hohen Leistungen geladen und entladen wird, besitzen in vielen Fällen eine Temperiervorrichtung bzw. insbesondere eine Kühlvorrichtung. Im Dokument DE-A 43 26 943 wird eine aus Rundzellen aufgebaute Akkumulatorenbatterie beschrieben, deren Zellen in einem rechteckigen Kasten angeordnet sind. Die Stirnseiten der Zellen sind frei zugänglich und durch das zwischen den Zellen freibleibende Zwickelvolumen wird Luft als Wärmeträgermedium geleitet. Weiterhin ist aus dem Dokument DE-U 92 10 384 bekannt, zwischen prismatischen Zellen flüssigkeitsdurchströmte Hohlkörper anzuordnen.

Es hat sich gezeigt, daß derartige Kühlanordnungen, insbesondere bei der Verwendung von Zellen mit hoher Energiedichte, die bei der Zerstörung einer Zelle durch Mißbrauch oder Unfall freiwerdende Wärmeenergie auf die gesamte Akkumulatorenbatterie verteilen, wobei nicht sichergestellt ist, daß ein thermisch induziertes Versagen und damit eine mögliche exotherme Zerstörung von weiteren oder allen Einzelzellen vermieden wird.

Der Erfindung liegt daher die Aufgabe zugrunde, eine Akkumulatorenbatterie anzugeben, die so aufgebaut ist, daß bei Überschreitung einer kritischen Temperatur in einer Einzelzelle diese Temperatur nicht direkt auf die Nachbarzellen übertragen wird, so daß eine Fortpflanzung der thermisch induzierten Zellenzerstörung von Nachbarzellen verhindert wird.

Diese Aufgabe wird erfindungsgemäß bei einem eingangs genannten mehrzelligen Akkumulator durch die kennzeichnenden Merkmale des Anspruchs 1 gelöst. Weitere vorteilhafte Ausgestaltungen der Erfindung sind in den Unteransprüchen beschrieben.

Der Erfindung liegt ein mehrzelliger Akkumulator zugrunde, bei dem die einzelnen Zellen durch eine wärmeisolierende Feststoffschicht voneinander getrennt sind. Die Wärmeübertragungseigenschaften dieser Feststoffschicht sind so bemessen, daß für den Fall, daß eine Zelle im Batterieverband durch Mißbrauch oder Unfall eine Temperatur über der kritischen Temperatur erreicht oder überschreitet, die Nachbarzellen aufgrund des Isoliermaterials zwischen den Zellen nur allmählich miterwärmt werden, ohne dabei ebenfalls auf die für die Zellen kritische Temperatur aufgeheizt zu werden. Dabei wird unter der kritischen Temperatur jene Temperatur verstanden, bei der es zu einer spontanen thermisch induzierten Zerstörung einer Zelle kommen kann. Dies wird dadurch erreicht, daß der Wärmewiderstand der Isolationsschicht zwischen den Zellen mindestens um einen Faktor K größer gewählt wird, als der innere Wärmewiderstand der einzelnen Zelle selbst.

Um auch bei gegeneinander isolierten Zellen eine Temperierung zu ermöglichen, ist zusätzlich ein Wärmeaustauscher an einer nicht mit Isoliermaterial versehenen, zugänglichen Seite des Batterieverbandes angeordnet und so bemessen, daß die Wärme von der Zelle, die eine kritische Temperatur erreicht oder überschritten hat, durch den Wärmetauscher hindurch zum Temperiermedium leicht abgeführt wird, während nur eine geringe Wärmemenge über den Wärmeaustauscher zu benachbarten Zellen abfließt. Dies wird dadurch erreicht, daß der Wärmewiderstand des Wärmeaustauschers zur Nachbarzelle hin mindestens um den Faktor K größer gewählt wird, als der innere Wärmewiderstand der einzelnen Zelle und ferner dadurch, daß der Wärmewiderstand des Wärmeaustauschers zum Temperiermedium hin mindestens um den Faktor 10 kleiner gewählt wird als der innere Wärmewiderstand der einzelnen Zelle.

Der Faktor K ist eine Zellenkonstante. Sie entspricht dem Verhältnis vom Energieinhalt der Zelle zu derjenigen Energiemenge, die benötigt wird, um eine Zelle auf eine Temperatur zu erwärmen, bei der es zur Auslösung eines thermisch induzierten Zellenversagens kommt. Dabei wird von einer festgelegten oberen Betriebstemperaturgrenze der Akkumulatorenbatterie ausgegangen. Die festgelegte obere Betriebstemperaturgrenze liegt beispielsweise bei Lithium-Akkumulatoren mit flüssigen Elektrolyten bei 50 - 70°C, insbesondere beträgt sie ca. 60°C.

Anstelle einer Einzelzelle kann selbstverständlich auch eine Gruppe von zwei oder mehreren Zellen treten, die dann gemeinsam gegen eine andere Gruppe von Einzelzellen isoliert sind. Hierbei gelten grundsätzlich die gleichen Randbedingungen hinsichtlich der Wärmeleitfähigkeit der Materialien.

Die erfindungsgemäße Isolationsschicht zwischen den Zellen besitzt eine Wärmeleitfähigkeit von 0,01 bis 0,2 W/(m*K). Grundsätzlich geeignete Materialien sind Isolationsmaterialien, die gegenüber den bei der Zerstörung einer Zelle auftretenden Temperaturen stabil sind. Insbesondere können Asbestersatzstoffe verwendet werden, wie sie zum Beispiel aus der Patentschrift DE 30 00 542 bekannt sind.

Erfindungsgemäß ist der Zellenverband mit einem Wärmeaustauscher versehen, der im einfachsten Fall eine Metallplatte und gegebenenfalls auch der Boden des die Zellen umgebenden Trogs ist. Diese Metallplatte ist so bemessen, daß einerseits eine schnelle Abkühlung einer Zelle, die eine kritische Temperatur erreicht, durch die Bodenplatte hindurch zum an dieser anliegenden Temperiermedium möglich ist, daß aber anderseits der Durchtrittsquerschnitt durch die Wärmeaustauscherplatte zur Nachbarzelle hin so klein ist, daß die Wärmeausbreitung zu den Nachbarzellen hin erheblich gehemmt ist.

Der Wärmeaustauscher besteht wie bereits erwähnt aus einem Metall, insbesondere ist dazu Eisen und Stahlblech geeignet. Im wesentlichen wird die Auswahl des Materials einerseits durch die Bedingungen an die Wärmeleitfähigkeit und die Abmessungen, anderseits durch die Festigkeitsanforderungen auch bei den typischerweise bei der Zerstörung von Zellen auftretenden Temperaturen bestimmt.

Als Temperiermedium kann Luft dienen, vorzugsweise wird eine Flüssigkeit als Temperiermedium verwendet, insbesondere ein an sich bekanntes Wasser/Glykolgemisch.

Selbstverständlich kann anstelle einer metallischen Platte auch ein entsprechender metallischer Hohlkörper dienen, der von der Flüssigkeit durchströmt wird. Dieser Wärmeaustauscher kann an einer oder beiden Stirnflächen der Zelle bzw. angeordnet sein, neben prismatischen Zellen können selbstverständlich auch Rundzellen in einer erfindungsgemäßen Anordnung verwendet werden.

Die durch die erfindungsgemäßen Isolationsschichten thermisch entkoppelten Einzelzellen sollten einen Energieinhalt von nicht mehr als 1 kWh besitzen.

Beispiele für erfindungsgemäß eingesetzte Wärmedämmstoffe sind in der nachfolgenden Tabelle enthalten.

| **Material** | **typ. Wärmeleitfähigkeit in W/(m*K)** |
|---|---|
| Glaswolle | 0.04 |
| Mikroporöse Mineralfaser | 0.02 |
| Steinwolle | 0.04 |
| Asbestplatten | 0.14 |
| SiO₂ Aerogel | 0.01 |

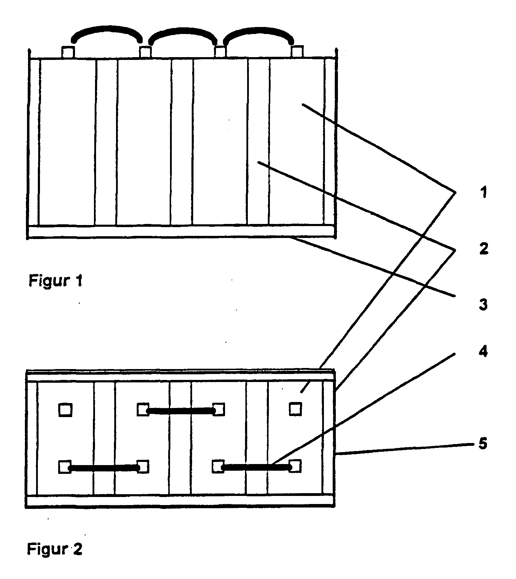

Die Erfindung ist in den Figuren 1 und 2 dargestellt.
Es zeigen:
Figur 1 - Die Seitenansicht einer Akkumulatorenbatterie,
Figur 2- Die Draufsicht einer Akkumulatorenbatterie.

In der erfindungsgemäßen Akkumulatorenbatterie sind die einzelnen Zellen 1 mit ihren großen Flächen parallel zueinander in einem Batterietrog angeordnet, dessen Boden durch einem Wärmetauscher 3 gebildet wird. Zwischen den einzelnen Zellen 1, bei mehreren Reihen von Zellen 1 zwischen den Reihen und zu den vertikalen Wänden des Batterietrogs 5 sind Wärmedämmschichten 2 vorgesehen. Die Wärmedämmschichten 2, die die einzelnen Zellen 1 zum Batterietrog 5 hin umgeben, sind nur halb so dick wie die Wärmedämmschicht 2 zwischen den Zellen 1, so daß die notwendige volle Dicke der Wärmedämmschicht 2 auch gegenüber einem unmittelbar angrenzenden baugleichen Batterietrog 5 sichergestellt ist, d.h., daß sich die Wärmedämmschichten 2 der aneinandergrenzenden Batterietröge 5 wieder zur erfindungsgemäßen Wärmedämmschichtdicke ergänzen.

### Beispiel 1

Eine Lithium-lonen Akkumulatorenbatterie bestehend aus 10 prismatischen Zellen mit den Abmessungen 30 x 210 x 180 mm ist in einem Batterietrog in der Weise angeordnet, daß 10 Zellen mit ihrer großen Seite hintereinander und in einer Reihe angeordnet sind. Zwischen den einzelnen Zellen ist in erfindungsgemäßer Weise eine Wärmedämmschicht vorhanden. Die Zellen haben eine Nennkapazität von 60 Ah und eine spezifische Energie von 120 Wh/kg. Ihre spezifische Wärmekapazität beträgt 0.28 Wh/(kg*K). Sie werden bis zu einer oberen Betriebstemperaturgrenze von 60°C betrieben. Die kritische Temperatur beträgt 150°C, so daß die zur Zerstörung einer bei der oberen Betriebstemperatur befindlichen Zelle eine Energie von 25.2 Wh/kg erforderlich ist (homogene Erwärmung). Damit ist die Kennzahl K gleich 120 Wh/kg / 25.2 Wh/kg = 4.8.

Die Zellen, deren Wärmeleitfähigkeit in Richtung der Nachbarzelle 0.5 W/(m*K) beträgt, werden erfindungsgemäß mit mikroporösen Mineralfaserplatten mit einer Wärmeleitfähigkeit von 0.02 W/(m*K) (Mikrotherm® ), welche 7 mm dick sind, gegeneinander thermisch isoliert. Bezogen auf die große Seitenfläche der Zellen hat diese Feststoffschicht einen Wärmewiderstand von 9.3 K/W. Der Wärmewiderstand einer einzelnen Zelle beträgt 1.6 K/W, so daß die Isolierschicht erfindungsgemäß mehr als den K-fachen Wärmewiderstand besitzt.

An den vertikalen Außenseiten der Akkumulatorenbatterie befinden sich Wärmedämmplatten mit der halben Dicke von 3.5 mm, bestehend aus dem gleichen Material, so daß auch die Zellen benachbarter Akkumulatorenbatterien entsprechend gegeneinander thermisch isoliert sind.

Darüber hinaus stehen alle Zellen der Akkumulatorenbatterie erfindungsgemäß auf einem Wärmetauscher aus Edelstahl mit einer Wärmeleitfähigkeit von 15 W/(m*K), der eine Wandstärke von 0.5 mm besitzt und von einem Wasser / Glykol - Gemisch durchströmt wird. Der Wärmewiderstand für den Wärmeübergang durch die Kühlerwandung von einer Zelle zur nächsten beträgt 11.7 K/W und ist damit um mehr als das K-fache höher als der innere Wärmewiderstand während der Wärmewiderstand für den Wärmeübergang durch die Kühlerwandung an das Kühlmittel mit etwa 5*10⁻³K/W um mehr als das 10-fache kleiner ist als der innere Wärmewiderstand der einzelnen Zelle.

### Beispiel 2

In einer Lithium-lonen Akkumulatorenbatterie, bestehend aus 60 Ah - Zellen mit den in Beispiel 1 genannten Eigenschaften, werden die Zellen zu Gruppen von beispielsweise 3 Einzelzellen zusammengefaßt. Zwischen den einzelnen Zellen einer Gruppe, die einen Energieinhalt von etwa 0.7 kWh besitzt, befindet sich kein Wärmedämmstoff. Die Zellengruppen werden gegeneinander mit einer Dämmstoffschicht, bestehend aus mikroporösen Mineralfaserplatten (Mikrotherm® ) isoliert. Die Dicke der Dämmstoffschicht beträgt 10 mm. Die Zellen sind stehend auf einem Bodenblech angeordnet, das selbst keine Wärmeaustauscherfunktion hat, welches jedoch eine wärmeleitende Kontaktierung an den Boden des Batteriegefäßes ermöglicht.

### Beispiel 3

In einer Lithium-lonen-Akkumulatorenbatterie, bestehend aus liegend angeordneten Rundzellen mit einem Energieinhalt von 0.25 kWh sind die Einzelzellen an ihrer Mantelfläche durchgehend von einem Wärmedämmstoff umgeben, der die Zellenzwischenräume ausfüllt, wobei der kürzeste radiale Abstand von Zellengefäß zu Zellengefäß etwa 3 mm beträgt. Die Zellenböden, welche alle zur gleichen Seite der Batterie zeigen, sind mit einem vertikal stehenden Wärmetauscher gekoppelt. Auf der gegenüberliegenden Seite liegen die Poldurchführungen der Rundzellen und die aufgesetzten elektrischen Zellenverbinder.

## Patentansprüche

1. Mehrzelliger Akkumulator, insbesondere aus wiederaufladbaren Lithium-Ionen-Zellen, mit einer Temperiervorrichtung, **dadurch gekennzeichnet, daß** nebeneinander angeordnete Einzelzellen durch eine wärmeisolierende Feststoffschicht voneinander getrennt sind, deren Wärmeleitfähigkeitkoeffizient zwischen 0,01 und 0,2 W/(m*K) liegt, wobei der Wärmewiderstand der Feststoffschicht mindestens um einen Faktor K größer ist als der Wärmewiderstand der Einzelzelle und daß die Einzelzelle mindestens an einem von Isoliermaterial freien Bereich mit einem Wärmeaustauscher in Verbindung steht, wobei der Wärmewiderstand des Wärmetauschers in Richtung zur Nachbarzelle mindestens um den Faktor K größer gewählt wird, als der Wärmewiderstand der einzelnen Zelle und außerdem der Wärmewiderstand des Wärmeaustauschers zum Temperiermedium hin mindestens um den Faktor Zehn kleiner gewählt wird als der Wärmewiderstand der einzelnen Zelle und wobei K das Verhältnis von Energieinhalt der Einzelzelle zu der für die Auslösung eines thermisch induzierten Zellenversagens bei einer festgelegten oberen Betriebstemperaturgrenze notwendigen Energiemenge ist.

2. Mehrzelliger Akkumulator nach Anspruch 1, **dadurch gekennzeichnet, daß** zwischen den Zellen eine Isolierschicht aus mikroporösen Mineralfaserplatten angeordnet ist.

3. Mehrzelliger Akkumulator nach den Ansprüchen 1 oder 2, **dadurch gekennzeichnet, daß** die festgelegte obere Betriebstemperaturgrenze nicht über 60°C liegt.

4. Mehrzelliger Akkumulator nach einem der Ansprüche 1 bis 3, **dadurch gekennzeichnet, daß** der maximale Energieinhalt einer Einzelzelle nicht über 1 kWh liegt.

5. Mehrzelliger Akkumulator nach einem oder mehreren der Ansprüche 1 bis 4, **dadurch gekennzeichnet, daß** als Wärmeaustauscher eine Metallplatte vorgesehen ist, welche einer der Stirnflächen der Akkumulatorenzellen zugeordnet ist.

6. Mehrzelliger Akkumulator nach den Ansprüchen 1 bis 5, **dadurch gekennzeichnet, daß** der Wärmeaustauscher ein aus Metall bestehender von Kühlflüssigkeit durchströmter Hohlkörper ist.

## Claims

1. Multicell storage battery, in particular one made of rechargeable lithium ion cells, having a temperature control device, **characterized in that** individual cells arranged alongside one another are separated from one another by a thermally insulating solid layer whose coefficient of thermal conductivity lies between 0.01 and 0.2 W/(m*K), the thermal resistance of the solid layer being greater by at least a factor K than the thermal resistance of the individual cell, and **in that** the individual cell is connected, at least in a region free of insulating material, to a heat exchanger, the thermal resistance of the heat exchanger in the direction towards the neighbouring cell being selected to be greater by at least a factor K than the thermal resistance of the individual cell and, in addition, the thermal resistance of the heat exchanger towards the temperature control medium being selected to be smaller by at least the factor ten than the thermal resistance of the individual cell, and K being the ratio of the energy content of the individual cell to the amount of energy which is needed to trigger a thermally induced cell failure at a defined upper operating temperature limit.

2. Multicell storage battery according to Claim 1, **characterized in that** an insulating layer of microporous mineral fibre plates is arranged between the cells.

3. Multicell storage battery according to Claim 1 or 2, **characterized in that** the defined upper operating temperature limit does not lie above 60°C.

4. Multicell storage battery according to one of Claims 1 to 3, **characterized in that** the maximum energy content of an individual cell does not lie above 1 kWh.

5. Multicell storage battery according to one or more of Claims 1 to 4, **characterized in that**, as heat exchanger, a metal plate is provided which is assigned to one of the ends of the storage battery cells.

6. Multicell storage battery according to Claims 1 to 5, **characterized in that** the heat exchanger is a hollow body, composed of metal, through which cooling liquid flows.

## Revendications

1. Accumulateur multicellulaire, comprenant notamment des cellules au lithium-ions rechargeables, avec un dispositif d'équilibrage de température,
**caractérisé en ce que**
des cellules individuelles juxtaposées sont séparées les unes des autres par une couche de substance solide isolante thermiquement, dont le coefficient de conductivité se situe entre 0,01 et 0,2 W/(m*K), la résistance thermique de la couche de substance solide étant au moins plus grande du facteur K que la résistance thermique de la cellule individuelle, et la cellule individuelle, du moins au niveau d'une zone dégagée du matériau isolant, est en relation avec un échangeur thermique, la résistance thermique de l'échangeur thermique en direction de la cellule voisine étant choisie au moins plus grande du facteur K que la résistance thermique de la cellule individuelle, et la résistance thermique de l'échangeur thermique en direction du fluide d'équilibrage de température étant en outre choisie plus petite au moins du facteur 10 que la résistance thermique de la cellule individuelle, et K étant le rapport entre le contenu énergétique de la cellule individuelle et la quantité d'énergie nécessaire pour déclencher une défaillance de cellule induite thermiquement à un seuil de température de fonctionnement supérieur déterminé.

2. Accumulateur multicellulaire selon la revendication 1,
**caractérisé en ce qu'**
une couche d'isolation réalisée à partir de plaques en fibres minérales microporeuses est disposée entre les cellules.

3. Accumulateur multicellulaire selon les revendications 1 ou 2,
**caractérisé en ce que**
le seuil de température de fonctionnement supérieur déterminé n'est pas supérieur à 60°C.

4. Accumulateur multicellulaire selon l'une quelconque des revendications 1 à 3,
**caractérisé en ce que**
le contenu énergétique maximum d'une cellule individuelle n'est pas supérieur à 1 kWh.

5. Accumulateur multicellulaire selon l'une quelconque ou plusieurs des revendications 1 à 4,
**caractérisé en ce qu'**
en tant qu'échangeur thermique une plaque métallique est prévue, associée à l'une des faces frontales des cellules d'accumulateur.

6. Accumulateur multicellulaire selon les revendications 1 à 5,
**caractérisé en ce que**
l'échangeur thermique est un corps creux métallique traversé par un liquide de refroidissement.
